# FASCICULE DE BREVET EUROPEEN

(11) **EP 2 736 742 B1**
(45) Date de publication et mention de la délivrance du brevet: **09.09.2015**
(21) Numéro de dépôt: 12744097.2
(22) Date de dépôt: 23.07.2012
(51) Int. Cl.: B60H 1/32, F25B 37/00, F25B 15/06, F25B 39/02, B60H 1/00, B01D 53/26, B01D 53/28

(54) **PLAQUE D'ABSORPTION POUR CLIMATISEUR**
ABSORPTIONSPLATTE FÜR EINE KLIMAANLAGE
ABSORPTION PLATE FOR AN AIR CONDITIONER

(30) Priorité: 26.07.2011 FR 1156835
(43) Date de publication de la demande: 04.06.2014
(73) Titulaire: PSA Peugeot Citroen Automobiles S.A., 78140 Velizy Villacoublay (FR)
(72) Inventeur: BOUDARD, Emmanuel, 78960 Voisins-le-Bretonneux (FR); GOHLKE, Marc, 69270 Saint-Romain-au-Mont-d'Or (FR); GOULET, Remi, 78000 Versailles (FR); DUMONT, Xavier, 92120 Montrouge (FR); MARTINEZ, Manuel, 92130 Issy-les-Moulineaux (FR)
(86) Numéro de dépôt international: PCT/FR2012/051752
(87) Numéro de publication internationale: WO 2013/014386

(56) Documents cités:
- EP-A1- 2 213 963
- DE-A1-102008 044 482
- US-A1- 2009 199 589

## Description

La présente invention concerne de manière générale une plaque d'absorption pour climatiseur monté sur un véhicule automobile.

Il est connu dans l'art antérieur des dispositifs de climatisation par absorption. Par exemple, le document EP 2 213 963 A1 qui est considéreré comme l'état de la technique le plus proche décrit un climatiseur par absorption comprenant des plaques d'absorption dans lesquelles un fluide absorbant, du bromure de lithium circule et absorbe un fluide réfrigérant, de la vapeur d'eau. En contrepartie, ce système présente notamment l'inconvénient de présenter une efficacité limitée par les capacités d'absorption par le fluide absorbant en fluide réfrigérant. En effet, lors de la réaction exothermique d'absorption en surface, le fluide absorbant, du bromure de lithium en contact avec le fluide réfrigérant, de la vapeur d'eau, chauffe et la couche de surface est rapidement saturée en fluide réfrigérant. L'absorption est limitée par la vitesse de transfert vers le coeur du flux de la chaleur dégagée et/ou du fluide réfrigérant. Il en résulte une efficacité globale assez faible du système car la vitesse de transfert (de la chaleur dégagée et du fluide réfrigérant absorbé) en direction du coeur du flux de solution absorbante limite très fortement les capacités d'absorption lors de la traversée de la plaque qui est de hauteur limitée pour réduire l'encombrement du système.

Par ailleurs, le document US 4 223 539 décrit un autre type de climatiseur par absorption où le fluide absorbant est projeté sur des tubes réfrigérants où il s'écoule et absorbe le fluide réfrigérant, et la surface de ces tubes comporte des protubérances créant une turbulence de surface. Une telle mise en oeuvre est coûteuse car le procédé de fabrication de protubérances à la surface d'un tube n'est pas aisé à mettre en oeuvre et sa faisabilité à l'échelle industrielle n'est pas démontrée. Par ailleurs, cette mise en oeuvre lie les protubérances à la surface sur laquelle s'écoule le fluide et cela rend difficile toute modification des protubérances ou de la surface. Cela complique aussi l'approvisionnement car la complexité d'un tel composant limite le nombre de fournisseurs. Cette mise en oeuvre n'est donc pas adaptable au domaine automobile où la flexibilité et les coûts sont un paramètre directeur de la conception. Enfin, l'encombrement d'un tel système ne permet pas son intégration dans un véhicule, compte tenu des contraintes géométriques.

Un but de la présente invention est de répondre aux inconvénients des documents de l'art antérieur mentionnés ci-dessus et en particulier, tout d'abord, de proposer un climatiseur par absorption qui présente un rendement élevé d'absorption sans pour autant nécessiter de composants complexes pour sa mise en oeuvre.

Pour cela, un premier aspect de l'invention concerne une plaque d'absorption, notamment de climatiseur par absorption pour véhicule, traversée par un flux de fluide absorbant liquide s'écoulant entre deux surfaces d'échange agencées relativement l'une en regard de l'autre, l'absorption exothermique d'un fluide dit réfrigérant en phase vapeur se faisant au travers desdites deux surfaces d'échange par augmentation d'une concentration du fluide réfrigérant dans le fluide absorbant, caractérisée en ce que l'agencement relatif des deux surfaces d'échange force au moins une partie du flux de fluide absorbant à traverser au moins une fois l'une des surfaces d'échange et provoque un mélange du flux de fluide absorbant. La plaque selon la présente invention améliore l'efficacité de l'absorption par le fluide absorbant en mélangeant le flux le long de la surface d'échange. En d'autres termes, grâce à l'agencement relatif des deux surfaces d'échange, la température du fluide absorbant, et/ou la concentration en fluide réfrigérant dans le fluide absorbant, tend à être homogène localement, latéralement et immédiatement en aval de la zone de mélange, à cause du mélange provoqué, de sorte qu'il y a peu de différence de température et de concentration entre la couche de surface et la zone au coeur du film. L'invention est économique à mettre en oeuvre, car c'est l'agencement de surfaces d'échange qui force le flux à traverser les surfaces d'échange ce qui provoque le mélange, il n'y a pas de composants supplémentaires à intégrer aux plaques selon l'invention. La mise en oeuvre de l'invention est particulièrement adaptée au domaine automobile car elle permet d'obtenir de bons rendements avec une grande compacité.

De manière avantageuse, l'agencement relatif des surfaces d'échange définit une section de passage entre les surfaces d'échange pour le flux de fluide absorbant, et l'agencement relatif des deux surfaces d'échange provoquant un mélange du flux de fluide absorbant est une diminution de la section de passage entre les surfaces d'échange pour le flux de fluide absorbant. Cette diminution peut être suivie d'une augmentation de la section de passage. La diminution de section provoque le passage du flux au travers des surfaces d'échange, ce qui a pour effet de provoquer en mélange tendant à homogénéiser la température du fluide absorbant, et/ou la concentration en fluide réfrigérant dans le fluide absorbant. L'augmentation consécutive de la section de passage opère un deuxième mélange augmentant encore l'efficacité du brassage du flux de fluide absorbant. Il est à noter que cette augmentation de section peut être provoquée par la tension de surface ou pression capillaire du fluide absorbant en interaction avec les grilles.

De manière avantageuse, la section de passage est définie par une distance entre les surfaces d'échange, et l'agencement relatif des deux surfaces d'échange provoquant un mélange du flux de fluide absorbant est une diminution locale de la distance entre les surfaces d'échange. Cette diminution de la distance entre les surfaces d'échange peut être suivie par une augmentation de la distance. Cette mise en oeuvre de l'invention est économique à réaliser.

De manière avantageuse, les surfaces d'échange sont localement jointes. L'efficacité de l'invention est maximale, car tout le flux de fluide absorbant devra traverser la surface d'échange, ce qui provoque un brassage optimal.

Avantageusement, les surfaces d'échange ont une largeur perpendiculaire au flux de fluide absorbant, et les surfaces d'échanges sont jointes sur toute la largeur des surfaces d'échange. Le flux est totalement mélangé car les surfaces d'échange sont jointives sur toute la largeur de la plaque. Cette opération pouvant être réalisée en une passe unique est le mode de réalisation le plus simple.

Alternativement ou en addition, les surfaces d'échange ont une largeur perpendiculaire au flux de fluide absorbant, et les surfaces d'échanges sont jointes selon une direction perpendiculairement au flux localement sur une longueur de jointure inférieure à la largeur des surfaces d'échange. Cette mise en oeuvre peut être implantée localement et permet des configurations spécifiques.

Avantageusement, les surfaces d'échange sont des grilles. Des grilles conviennent bien pour réaliser les surfaces d'échanges et le flux de fluide absorbant peut facilement les traverser pour la mise en oeuvre de l'invention.

Un second aspect de l'invention est un climatiseur pour véhicule comprenant au moins une plaque d'absorption selon le premier aspect de l'invention.

Un dernier aspect de l'invention est un véhicule automobile comportant au moins un climatiseur selon le deuxième aspect de l'invention.

D'autres caractéristiques et avantages de la présente invention apparaîtront plus clairement à la lecture de la description détaillée qui suit d'un mode de réalisation de l'invention donné à titre d'exemple nullement limitatif et illustré par les dessins annexés, dans lesquels :
- la figure 1 représente une plaque d'absorption selon l'art antérieur ;
- la figure 2 représente une plaque d'absorption selon un premier mode de réalisation de l'invention.

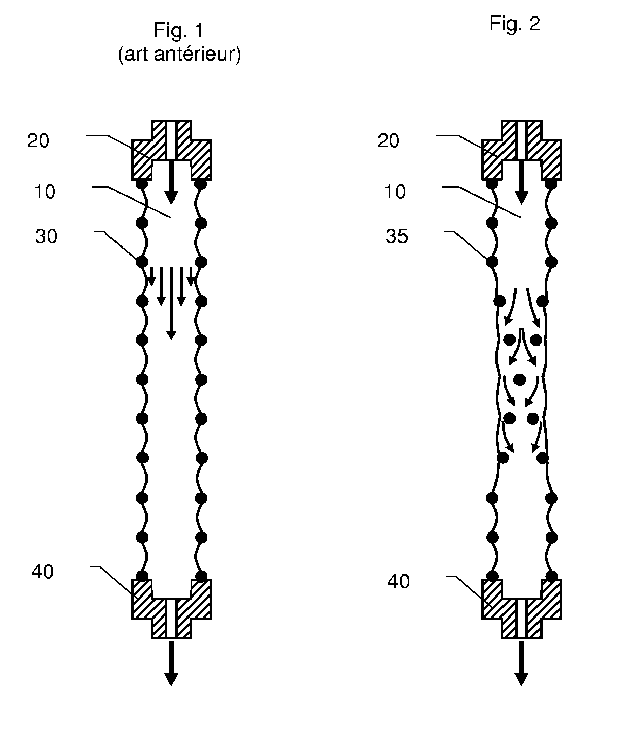

La figure 1 représente une plaque d'absorption telle que celles connues dans l'art antérieur. Deux grilles 30 définissent un conduit dans lequel circule par gravité un flux de fluide absorbant 10, du bromure de lithium par exemple. Un cadre solidarise les grilles 30 et sa partie supérieure 20 comporte un trou d'alimentation par lequel entre le fluide absorbant entre les deux plaques. La partie inférieure 40 comporte quant à elle un trou d'évacuation relié au reste du circuit de fluide absorbant. L'écoulement entre les deux plaques est essentiellement laminaire, tel que le montrent les flèches entre les grilles 30. La plaque est agencée dans un réservoir contenant une phase gazeuse riche en vapeur de réfrigérant. Cela peut être de l'eau sous forme de vapeur, par exemple.

Au cours de son trajet entre les deux plaques, le bromure de lithium va absorber l'eau au travers des grilles 30, dans sa couche externe. Celle-ci va se charger en eau et sa concentration en eau de la solution saline de bromure de lithium va augmenter, ainsi que sa température. La capacité d'absorption est limitée par la vitesse de transfert en direction du coeur du flux de solution saline du réfrigérant absorbé à la surface de la solution saline et de la chaleur dégagée. Dans le cas d'un flux de bromure de lithium laminaire ou faiblement instable, la chaleur dégagée à la surface et le réfrigérant absorbé diffusent très lentement en direction du coeur du flux de solution saline.

La figure 2 représente une plaque selon un mode de réalisation de l'invention, les deux grilles 35 sont agencées en regard l'une de l'autre et se rejoignent jusqu'à devenir jointives, de sorte que tout le flux de fluide absorbant doit traverser les deux grilles 35, ce qui provoquera un mélange et une homogénéisation de la température et/ou de la concentration en eau dans le bromure de lithium s'opère. La couche externe du flux se mélange dans le reste du flux et la température et/ou la concentration en eau du bromure de lithium baisse dans la zone à proximité de surface du flux de fluide absorbant, ce qui permet d'augmenter l'efficacité de l'absorption et du climatiseur. Les deux grilles 35 s'éloignent ensuite l'une de l'autre et le flux de fluide absorbant retraverse une deuxième fois les grilles 35, ce qui provoque un deuxième mélange.

On comprendra que diverses modifications et/ou améliorations évidentes pour l'homme du métier peuvent être apportées aux différents modes de réalisation de l'invention décrits dans la présente description sans sortir du cadre de l'invention défini par les revendications annexées. En particulier, on peut envisager de multiplier les zones de mélange sur une même plaque (sur la largeur totale et sur une longueur inférieure à celle-ci).

## Revendications

1. Plaque d'absorption, notamment de climatiseur par absorption pour véhicule, traversée par un flux de fluide absorbant liquide (10) s'écoulant entre deux surfaces d'échange (35) agencées relativement l'une en regard de l'autre, l'absorption exothermique d'un fluide dit réfrigérant en phase vapeur se faisant au travers desdites deux surfaces d'échange (35) par augmentation d'une concentration du fluide réfrigérant dans le fluide absorbant (10), **caractérisée en ce que** l'agencement relatif des deux surfaces d'échange (35) force au moins une partie du flux de fluide absorbant (10) à traverser au moins une fois l'une des surfaces d'échange (35) et provoque un mélange du flux de fluide absorbant (10).

2. Plaque d'absorption selon la revendication 1, l'agencement relatif des surfaces d'échange (35) définissant une section de passage entre les surfaces d'échange (35) pour le flux de fluide absorbant (10), **caractérisée en ce que** l'agencement relatif des deux surfaces d'échange (35) provoquant un mélange du flux de fluide absorbant (10) est une diminution de la section de passage entre les surfaces d'échange (35) pour le flux de fluide absorbant (10).

3. Plaque d'absorption selon la revendication 2, la section de passage étant définie par une distance entre les surfaces d'échange (35), **caractérisée en ce que** l'agencement relatif des deux surfaces d'échange (35) provoquant un mélange du flux de fluide absorbant (10) est une diminution locale de la distance entre les surfaces d'échange (35).

4. Plaque d'absorption selon l'une des revendications 1 à 3, **caractérisée en ce que** les surfaces d'échange (35) sont localement jointes.

5. Plaque d'absorption selon l'une des revendications 1 à 4, les surfaces d'échange ayant une largeur perpendiculaire au flux de fluide absorbant (10), **caractérisée en ce que** les surfaces d'échange (35) sont jointes sur toute la largeur des surfaces d'échange (35).

6. Plaque d'absorption selon l'une des revendications 1 à 4, les surfaces d'échange (35) ayant une largeur perpendiculaire au flux de fluide absorbant (10), **caractérisée en ce que** les surfaces d'échange (35) sont jointes selon une direction perpendiculairement au flux localement sur une longueur de jointure inférieure à la largeur des surfaces d'échange (35).

7. Plaque d'absorption selon l'une des revendications 1 à 6, **caractérisée en ce que** les surfaces d'échange (35) sont des grilles.

8. Climatiseur par absorption comportant au moins une plaque d'absorption selon l'une des revendications 1 à 7.

9. Véhicule automobile comportant au moins un climatiseur par absorption selon la revendication 8.

## Patentansprüche

1. Absorptionsplatte, insbesondere für Klimaanlage durch Absorption für Fahrzeug, die von einem flüssigen Fluidstrom (10) durchquert ist, der zwischen zwei Austauschoberflächen (35), die in Gegenüberlage zueinander angeordnet sind, fließt, wobei die exotherme Absorption eines Kühlflüssigkeit genannten Fluids in Dampfphase durch die zwei Austauschoberflächen (35) durch Erhöhung einer Konzentration der Kühlflüssigkeit in dem absorbierenden Fluid (10) erfolgt, **dadurch gekennzeichnet, dass** die relative Anordnung der zwei Austauschoberflächen (35) mindestens einen Teil des absorbierenden Fluidstroms (10) zwingt, eine der Austauschoberflächen (35) mindestens einmal zu durchqueren, und ein Mischen des absorbierenden Fluidstroms (10) bewirkt.

2. Absorptionsplatte nach Anspruch 1, wobei die relative Anordnung der Austauschoberflächen (35) einen Durchgangsquerschnitt zwischen den Austauschoberflächen (35) für den absorbierenden Fluidstrom (10) definiert, **dadurch gekennzeichnet, dass** die relative Anordnung der zwei Austauschoberflächen (35), die ein Mischen des absorbierenden Fluidstroms (10) verursacht, eine Verringerung des Durchgangsquerschnitts zwischen den Austauschoberflächen (35) für den absorbierenden Fluidstrom (10) ist.

3. Absorptionsplatte nach Anspruch 2, wobei der Durchgangsquerschnitt durch einen Abstand zwischen den Austauschoberflächen (35) definiert ist, **dadurch gekennzeichnet, dass** die relative Anordnung der zwei Austauschoberflächen (35), die ein Mischen des absorbierenden Fluidstroms (10) verursacht, eine lokale Verringerung des Abstands zwischen den Austauschoberflächen (35) ist.

4. Absorptionsplatte nach einem der Ansprüche 1 bis 3, **dadurch gekennzeichnet, dass** die Austauschoberflächen (35) lokal verbunden sind.

5. Absorptionsplatte nach einem der Ansprüche 1 bis 4, wobei die Austauschoberflächen eine Breite senkrecht zu dem absorbierenden Fluidstrom (10) haben, **dadurch gekennzeichnet, dass** die Austauschoberflächen (35) auf der gesamten Breite der Austauschoberflächen (35) verbunden sind.

6. Absorptionsplatte nach einem der Ansprüche 1 bis 4, wobei die Austauschoberflächen (35) eine Breite senkrecht zu dem absorbierenden Fluidstrom (10) haben, **dadurch gekennzeichnet, dass** die Austauschoberflächen (35) entlang einer Richtung senkrecht zu dem Strom lokal auf einer Verbindungslänge verbunden sind, die kleiner ist als die Breite der Austauschoberflächen (35).

7. Absorptionsplatte nach einem der Ansprüche 1 bis 6, **dadurch gekennzeichnet, dass** die Austauschoberflächen (35) Gitter sind.

8. Klimaanlage durch Absorption, die mindestens eine Absorptionsplatte nach einem der Ansprüche 1 bis 7 umfasst.

9. Kraftfahrzeug, das mindestens eine Klimaanlage durch Absorption nach Anspruch 8 umfasst.

## Claims

1. An absorption plate, in particular of an absorption air conditioner for a vehicle, crossed by a stream of liquid absorbent fluid (10) flowing between two exchange surfaces (35) arranged relatively opposite one another, the exothermal absorption of a so-called coolant fluid in vapour phase taking place through said exchange surfaces (35) by increasing a concentration of the coolant fluid in the absorbent fluid (10), **characterized in that** the relative arrangement of the two exchange surfaces (35) forces at least one portion of the stream of absorbent fluid (10) to pass at least once through one of the exchange surfaces (35) and causes mixing of the stream of absorbent fluid (10).

2. The absorption plate according to claim 1, the relative arrangement of the exchange surfaces (35) defining a passage section between the exchange surfaces (35) for the stream of absorbent fluid (10), **characterized in that** the relative arrangement of the two exchange surfaces (35) causing a mixture of the stream of absorbent fluid (10) is a reduction of the passage section between the exchange surfaces (35) for the stream of absorbent fluid (10).

3. The absorption plate according to claim 2, the passage section between defined by a distance between the exchange surfaces (35), **characterized in that** the relative arrangement of the two exchange surfaces (35) causing a mixture of the stream of absorbent fluid (10) is a local reduction of the distance between the exchange surfaces (35).

4. The absorption plate according to one of claims 1 to 3, **characterized in that** the exchange surfaces (35) are locally joined.

5. The absorption plate according to one of claims 1 to 4, the exchange surfaces having a width perpendicular to the stream of absorbent fluid (10), **characterized in that** the exchange surfaces (35) are joined over the entire width of the exchange surfaces (35).

6. The absorption plate according to one of claims 1 to 4, the exchange surfaces (35) having a width perpendicular to the stream of absorbent fluid (10), **characterized in that** the exchange surfaces (35) are joined along a direction perpendicularly to the stream locally over a join length less than the width of the exchange surfaces (35).

7. The absorption plate according to one of claims 1 to 6, **characterized in that** the exchange surfaces (35) are grids.

8. An absorption air conditioner comprising at least one absorption plate according to one of claims 1 to 7.

9. A motor vehicle comprising at least one absorption air conditioner according to claim 8.
